(19) Europäisches Patentamt
European Patent Office
Office européen des brevets

(11) Publication number: **0 108 570**
**B1**

(12) # EUROPEAN PATENT SPECIFICATION

(45) Date of publication of patent specification: **29.10.86**

(51) Int. Cl.[4]: **C 09 B 62/085,** D 06 P 3/66

(21) Application number: **83306582.4**

(22) Date of filing: **28.10.83**

(54) **Disazo dyestuffs for cellulose-containing fibres and process for preparing the dyestuff.**

(30) Priority: **28.10.82 JP 189533/82**

(43) Date of publication of application:
**16.05.84 Bulletin 84/20**

(45) Publication of the grant of the patent:
**29.10.86 Bulletin 86/44**

(84) Designated Contracting States:
**CH DE FR GB LI**

(56) References cited:
**CHEMICAL ABSTRACTS, vol. 94, no. 14, April 1981, page 81, no. 104886a, Columbus, Ohio, USA;**

**PATENTS ABSTRACTS OF JAPAN, vol. 7, no. 69(C-158)(1214), 23rd March 1983;**

(73) Proprietor: **MITSUBISHI CHEMICAL INDUSTRIES LIMITED**
**5-2, Marunouchi 2-chome Chiyoda-ku**
**Tokyo 100 (JP)**

(72) Inventor: **Niwa, Toshio**
**8-7, Utsukushigaoka 5-chome Midori-ku**
**Yokohama-shi Kanagawa (JP)**
Inventor: **Himeno, Kiyoshi**
**3, Tsutsujigaoka 3-chome Midori-ku**
**Yokohama-shi Kanagawa (JP)**
Inventor: **Hihara, Toshio**
**1-9-503, Azamino 3-chome Midori-ku**
**Yokohama-shi Kanagawa (JP)**

(74) Representative: **Moore, Anthony John et al**
**Gee & Co. Chancery House Chancery Lane**
**London WC2A 1QU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 108 570 B1**

**Description**

This invention relates to reactive disazo dyestuffs which dye cellulose-containing fibre, especially cellulose fibre itself and fibre mixtures comprising cellulose fibre and polyester fibre, violet or blue.

Known disazo dyestuffs for dyeing cellulose-containing fibre violet or blue do not have excellent light fastness and moisture fastness and it is the aim of the present invention to provide a class of disazo dyestuffs which exhibits these properties to greater degree.

Our JP—A—79/33983 (abstracted in Chem. Abstracts, Vol. 94, No. 14, April 1981, page 81) discloses reactive disazo dyes for dyeing cellulosic fibres and cellulosic/polyester fibre blends in fast blue shades. These dyes are of generally similar structure to those of formula (I) of the present invention except that the group bridging the two azo (—N=N—) groups is an aromatic benzene group which may have 1 or 2 substituents e.g. cyano or alkoxycarbonyl, whereas in the dyes of the invention this bridging group is a heterocylic 5-membered thiophene group substituted with cyano or alkoxycarbonyl. The use of the thiophene group provides an unexpected improvement in light and wet-fastness of the dye.

According to the present invention there is provided a disazo dyestuff for cellulose-containing fibre and having the following general formula (I):

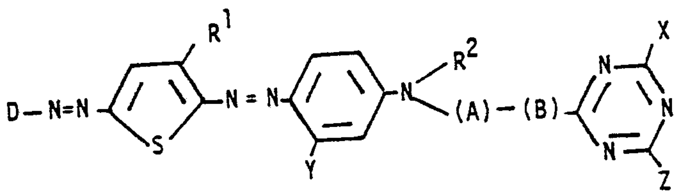

(I)

wherein D represents substituted or unsubstituted phenyl, pyridyl, thiazolyl or benzothiazolyl; $R^1$ represents cyano or alkoxycarbonyl; Y represents hydrogen, chlorine, methyl or acylamino; R represents substituted or unsubstituted alkyl, cyclohexyl, alkenyl or aryl; Z represents $—NR^3R^4$ or $OR^5$ wherein $R^3$, $R^4$ and $R^5$ each represents hydrogen or an alkyl, alkenyl, cyclohexyl, aryl or aralkylk group which may be substituted by cyano, hydroxyl, alkoxy or dialkylamino, or $R^1$ and $R^2$ may together represent a 5-membered nitrogen-containing heterocyclic ring; A represents

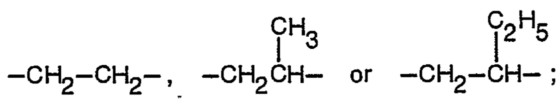

or

B represents oxygen or —NH—; and X represents fluorine or chlorine.

Examples of the substituted phenyl, pyridyl, thiazolyl or benzothiazolyl represented by D in the general formula (I) above include phenyl substituted with fluorine, chlorine, bromine, methyl, ethyl, trifluoromethyl, methoxy, ethoxy, phenylazo, cyano, nitro, methylsulfonyl, ethylsulfonyl, allylsulfonyl, lower alkoxycarbonyl, lower alkoxyethoxycarbonyl, allyloxyethylcarbonyl, mono-lower alkylaminocarbonyl, di-lower alkylaminocarbonyl, diallylaminocarbonyl, monoallylaminocarbonyl, dimethylaminosuflfonyl, diethylaminosulfonyl, monomethylaminosulfonyl, monoethylaminosulfonyl, acetyl or phenyl; pyridyl substituted with chlorine, bromine, nitro, methyl, methylsulfonyl or cyano; thiazolyl substituted with methyl, chlorine, bromine, nitro, lower alkoxycarbonyl, methoxyethoxycarbonyl, ethoxyethoxycarbonyl, trifluoromethyl or methylsulfonyl; and benzothiazolyl substituted with methyl, chlorine, bromine, nitro, lower alkoxycarbonyl, trifluoromethyl or methylsulfonyl.

Examples of acyl amino represented by Y include acetylamino, chloroacetylamino, benzoylamino, methylsulfonylamino, chloropropionylamino, ethoxycarbonylamino, or ethylaminocarbonylamino.

Examples of the unsubstituted alkyl represented by $R^2$ include methyl, ethyl, straight or branched propyl, butyl, pentyl, hexyl, heptyl and octyl; and examples of substituted alkyl include lower alkoxyalkyl such as methoxyethyl, ethoxyethyl and butoxyethyl; lower alkoxyalkoxyalkyl such as methoxyethoxyethyl and ethoxyethoxyethyl; phenoxyalkyl such as phenoxyethyl; aralkyloxy lower alkyl which may be substituted, such as benzyloxyethyl and chlorobenzyloxyethyl; hydroxyalkyl which may be substituted, such as hydroxethyl, hydroxypropyl, hydroxybutyl, hydroxyhexyl, and 2-hydroxy-3-methoxypropyl; cyano lower alkyl such as cyanomethyl and cyanoethyl; acyloxy lower alkyl which may be substituted, such as acetyloxyethyl, chloroacetyloxyethyl, chloropropionyloxyethyl and benzoyloxyethyl; methoxycarbonyloxyethyl; alkoxycarbonyloxy lower alkyl such as methoxyethoxycarbonyloxyethyl; carbamoyl lower alkyl such as carbamoylmethyl and carcamoylethyl; alkoxycarbonyl lower alkyl which may be substituted, such as methoxycarbonylmethyl, ethoxycarbonylmethyl, methoxyethoxycarbonylmethyl and benzyloxycarbonylmethyl; aralkyl which may be substituted, such as benzyl, phenethyl and chlorobenzyl; allyloxycarbonyl lower alkyl such as allyloxycarbonylethyl and allyloxycarbonylmethyl; tetrahydrofurfuryl; succinimide lower alkyl such as succinimidoethyl; phthalic imide lower alkyl such as phthalimidoethyl; cyanoalkoxy lower alkyl such as cyanoethoxyethyl, cyanomethoxyethyl; and halo(lower)alkyl such as chloroethyl.

Examples of aryl include phenyl, chlorophenyl and methylphenyl.

Examples of nitrogen-containing heterocyclic represented by —$NR^3R^4$ include 1-pyrrolidinyl, 3-methyl-1-pyrrolidinyl, 2-hydroxyethyl-1-pyrrolidinyl, 2,5-dimethyl-1-pyrrolidinyl, 3-thiazolindinyl, 1-pyrrolyl, 1-pyrasolyl, 1-imidazolyl, morpholino, piperidino, 2,6-dimethylpiperidino, 1-piperadinyl and 4-methyl-1-piperadinyl.

A particularly preferred example of —$NR^3R^4$ is di-substituted amino having a total number of carbon atoms of from 6 to 12.

The disazo dyestuffs represented by the formula (I) above can be prepared by diazotizing an amine represented by the following general formula (II):

$$D—NH_2 \qquad (II)$$

wherein D is as defined above, coupling the diazotized compound with an amine represented by the following general formula (III):

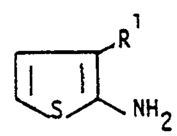

(III)

wherein $R^1$ is as defined above, diazotizing the thus-obtained monozo compound represented by the following general formula (IV):

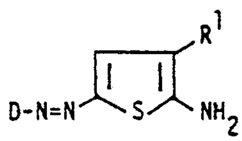

(IV)

wherein D and $R^1$ are as defined above, and then coupling the diazotized compound with an aniline represented by the following general formula (V):

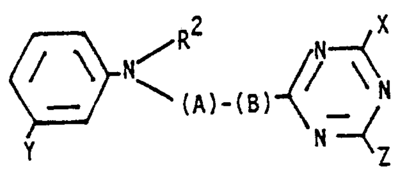

(V)

wherein X, Y, Z, A, B and $R^2$ are as defined above.

The aniline represented by the formula (V) may be prepared by reacting an aniline represented by the following general formula (VI):

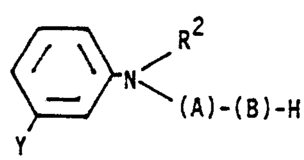

(VI)

wherein Y, $R^2$, A and B are as defined above, with 2,4,6-trihalogenotriazine in a solvent such as N-methylpyrrolidone or acetone, at 0 to 10°C for 2 to 10 hours in the presence of a neutralization reagent for such as triethylamine or sodium carbonate, and then reacting the thus-obtained compound represented by the following general formula (VII):

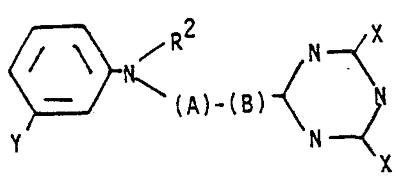

(VII)

wherein X, Y, $R^2$, A and B are as defined above, with an alcohol or amine represented by the following general formula (VIII):

$$ZH \qquad (VIII)$$

wherein Z is as defined above, at room temperature for 2 to 10 hours in a solvent such as N-methylpyrrolidone or acetone, in the presence of a neutralization reagent such as triethylamine or sodium carbonate.

Examples of the amines represented by the formula D—$NH_2$ include benzene type amines such as aniline, o-, m- or p-fluoroaniline, o-, m- or p-chloroaniline, o-, m- or p-bromoaniline, 2,4-dichloroaniline, 2,3-dichloroaniline, 2-chloro-4-bromoaniline, 2,4-difluoroaniline, 2,4,6-trichloroaniline, o-, m- or p-toluidine, o-, m- or p-ethylaniline, o-, m- or p-anisidine, m-trifluoromethylaniline, 4-phenylazoaniline, o-, m- or p-cyano-aniline, o-, m- or p-nitroaniline, 2-chloro-4-nitroaniline, 2-bromo-4-nitroaniline, 2-cyano-4-nitroaniline, 2-chloro-4-methoxyaniline, o-, m- or p-methylsulfonylaniline, o-, m- or p-ethylsulfonylaniline, o-, m- or p-methoxycarbonylaniline, o-, m- or p-ethoxycarbonylaniline, p-butoxycarbonylaniline, p-allyloxycarbonyl-aniline, p-allyloxyethoxycarbonylaniline, o- or m- or p-methoxyethoxycarbonylaniline, p-N,N-dimethyl-aminocarbonylaniline, p-N-ethylaminocarbonylaniline, p-N-allylaminocarbonylaniline, 2-chloro-4-methoxycarbonylaniline, p-N,N-dimethylaminosulfonylaniline, m-N,N,-diethylaminosulfonylaniline, p-N-ethylaminosulfonylaniline and p-phenylaniline; pyridine; pyridine type amines such as 3-aminopyridine, 3-amino-6-bromopyridine, 3-amino-5-bromopyridine, 3-amino-6-chloropyridine, 4,6-dichloro-3-aminopyridine, 3-amino-6-nitropyridine, 3-amino-4-cyanopyridine, 3-amino-5-methylpyridine, 3-amino-6-methylsulfonylpyridine, 3-amino-4-chloro-6-nitropyridine and 3-amino-5-methyl-6-bromopyridine; thiazole type amines such as 2-aminothiazole, 2-amino-4-methylthiazole, 2-amino-4-methyl-5-ethoxy-carbonylthiazole, 2-amino-5-nitrothiazole, 2-amino-5-bromothiazole, 2-amino-5-chlorothiazole, 2-amino-4-trifluoromethylthiazole, 2-amino-4-methyl-5-methoxyethoxycarbonylthiazole and 2-amino-4-methyl-5-bromothiazole; and benzothiazole type amines such as 2-aminobenzothiazole, 2-amino-4,6-dibromobenzothiazole, 2-amino-6-sulfomethylbenzothiazole, 2-amino-5,6-dichlorobenzothiasole and 2-amino-6-nitrobenzothiazole.

Examples of the cellulose-containing fibres which can be dyed with the dystuffs represented by the formula (I) include natural fibre such as cotton and linen; semi-synthetic fibre such as viscose rayon and copper ammonia rayon; fibre such as modified cellulose fibre which is partially aminated or partially acylated; and woven, non-woven or knitted fabrics thereof. Further, mixed yarns or mixed woven fabrics of the above-described fibres and one or more other fibres such as polyester fibre, cation-dyeable polyester fibre, aniondyeable polyester fibre, polyamine fibre, wool, acrylic fibre, urethane fibre, diacetate fibre and triacetate fibre, can also be used. Of those, the dyestuffs are particularly effective for cellulose fibre and mixed yarns or mixed woven fabrics of cellulose fibre and polyester fibre.

In dyeing, it is preferred that the dyestuffs represented by the formula (I) above be finely dispersed in a medium in a particle size of about 0.5 to 2 μ. The dispersion methods include a method which comprises finely dispersing the dyestuff in water with a crusher such as sand as a sand grinder or mill, using a water-soluble dispersion agent such as a nonionic dispersion agent, e.g. a pluronic type surface active agent or an anionic dispersion agent, e.g. sodium ligninsulfonate or a sodium salt of naphthalenesulfonic acid-formaldehyde condensate: a method which comprises finely dispersing the dyestuffs in a solvent other than water, e.g. an alcohol such as ethyl alcohol, isopropy, alcohol or polyethylene glycol; a ketone such as acetone or methyl ethyl ketone; a hydrocarbon such as n-hexane, toluene, xylene or mineral terpene; a halogenated hydrocarbon such as tetrachloroethylene; an ester such as ethyl acetete or butyl acetate; an ether such as dioxane or tetraethylene glycol dimethyl ether; or a mixed solvent thereof, together with a sparingly soluble or water-insoluble dispersion agent such sulfosuccinic acid ester or an addition product of nonylphenol, and a small molar amount of, e.g. ethylene oxide: or a method which comprises finely dispersing the dyestuffs in a mixed solvent system of water and a solvent freely compatible with water in the presence of one of the above-described solvents.

During the course of the dispersion described above, a high molecular weight compound which is soluble in the respective dispersion medium or a surface active agent having a function other than a dispersion action may also be added.

The fine dispersion of the dyestuff can be used as a padding bath in pad dyeing or as a printing paste in print dyeing as it is. In general, however, a diluted dispersion obtained by diluting the fine dispersion of the dyestuff to a concentration depending upon the desired dyeing concentration with water; a mixed system of a solvent freely compatible with water and water or an O/W or W/O emulsion in which the oily layer is a petroleum hydrocarbon such as mineral terpene or a halogenated hydrocarbon such as tetrachloroethylene, is employed as a padding bath or as a printing paste.

In the preparation of the padding bath or printing paste an alkali metal compound, a organic epoxy compound or an organic vinyl compound may, for example, also be advantageously added as an acid-binding agent for the purpose of accelerating the reaction of cellulose fibre-swelling agent or the dyestuff with cellulose fibre. Not only an alkali metal carbonate, but also an alkali metal bicarbonate, an alkali metal phosphate, an alkali meal borate, an alkali metal silicate, an alkali metal hyroxide, an alkali metal fatty acid salt such as an alkali metal fatty acid salt such as an alkali metal acetete, or an alkali precursor such as sodium trichloroacetate or sodium acetoacetate, which generates an alkali when heated in the presence of water, may be empolyed as an alkali metal compound. The amount of alkali metal compound generally used is such that the pH of the padding bath or printing paste is 7.5 to 8.5.

Examples of the organic epoxy compounds include ethylene glycol diglycidyl ether and polyethylene gylcol diglycidyl ether having an average molecular weight of 150 or 400.

Examples of organic vinyl compounds include ethylene glycol diacrylate and diacrylate or dimethacrylate of polyethylene glycol having an average molecular weight of 150 to 400. The amount of these compounds used is approximately 3 to 6 wt % based on the weight of the padding bath or printing paste.

For the purpose or preventing dry migration in padding dyeing or for the purpose of controlling the color paste to an optimum viscosity for various printing dying methods, a thickener, e.g. a water-soluble high molecular weight material such as sodium alginate, may also be added.

The preparation of the padding bath or printing color paste is not limited to the methods described above. Furethermoure, it is not always necessary that the cellulose fibre-swelling agent and the acid-binding agent may be present in the padding bath or printing color paste but they may alternatively be previously present in the fibre.

Any compound can be used as the cellulose fibre-swelling agent so long as it has a boiling point of at least 150°C and has the effect of swelling cellulose fibre. Examples thereof include ureas such as N,N,N′,N′-tetramethylurea; polyhydric alcohols such as polyethylene glycol and polypropylene glycol, and derivatives therof. Of these, polyhydric alcohol derivatives having an average molecular weight of about 200 to 500 such as polyethylene glycol or polypropylene glycol, wherein the hydroxy groups at both terminals are not reactive with reactive groups of dimethylate or diacetylated dyestuffs, are particularly preferred as the cellular fibre-swelling agent.

The amount of the cellulose fibre-swelling agent used is about 5 to 25 wt %, preferably about 8 to 15 wt%, based on the weight of the padding bath or printing color paste.

Dyeing of the above-described fibre with the dyestuff represented by the general formula (I) is conducted in a conventional manner, e.g., by impregnating or printing the cellulose fibre-containing material with the thus-prepared padding bath or printing color paste, drying the material, heat-treating the material with hot air at 160 to 220°C or with superheated steam for 30 seconds to 10 minutes or, alternatively, treating the material in a high pressure saturated steam at 120 to 150°C for 3 to 30 minutes, and then washing with hot water containing surface active agent; or washing with an O/W or W/O emulsion-washing bath in which the oily layer is halogenated hydrocarbon such as tetrachloroethylene; or washing in the conventional dry cleaning method.

By the process described above, dyed materials which are clearly and uniformly dyed and have good light fastness and good moisture fastness can be obtained.

The present invention will now be described in more detail in the following Examples in which all parts are by weight.

Example 1

A dyestuff dispersion was prepared from a dyestuff composition composed of 15 parts of a disazo dyestuff represented by the structural formula

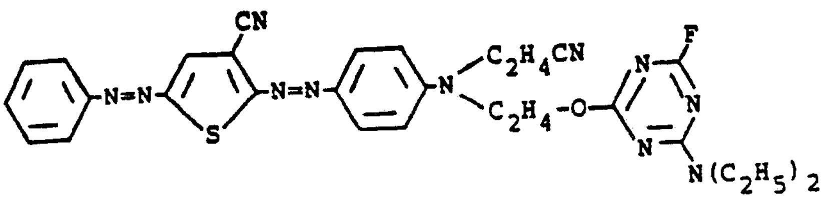

15 parts of naphthalenesulfonic acid-formaldehyde condensate and 70 parts of water using a paint shaker as a fine dispersion machine. Using this dyestuff dispersion, a printing color paste having the following composition:

| | |
|---|---|
| Dye dispersion | 6.5 parts |
| 5% Sodium alginate aqueous solution | 55 parts |
| Polyethylene glycol dimethyl ether, average molecular weight: 400 | 9 parts |
| Water | 29.5 parts |
| | 100 parts |
| | (pH 8.0) |

was prepared. A polyester/cotton (mixing weight ratio, 65/35) mixed spun cloth was print-dyed with the printing color paste using a screen print dyeing machine. After provisionally drying at 80°C for 3 minutes,

the cloth was dry heated at 215°C for 90 seconds to fix the paste. After washing with water, the cloth was soaped with a detergent containing 2 g/l of a nonionic surface active agent ("Scourol #900", trademark, manufactured by Kao Soap Co., Ltd.) in a bath ratio of 1:30 at 80°C for 20 minutes to obtain a reddish blue dyed product having excellent light fastness and wet color fastness.

The dyestuff used in this Example was prepared by adding 9.12 g of 2-amino-3-cyano-5-phenylazo-thiophene to a mixture of 160 ml of 85% phosphoric acid and 200 ml of glacial acetic acid, cooling the mixture to 5° C or less, gradually adding 17.0 g of nitrosil sulfuric acid, stirring the resulting mixture at 0 to 2°C for 4 hours, dropwise adding thus obtained diazo liquid to a solution prepared by dissolving 2 g of urea and 14.3 g of N-cyanoethyl-N-(2-fluoro-4-N,N-diethylamino-6-triazinyloxy)ethylaniline in 300 ml of methanol, separating the resulting precipitates by filtration, washing with water and then drying at room temperature to obtain 18 g (yield 75%) of blue powdered dyestuff represented by the strüctural formula described above. The λmax of the dyestuff in acetone was 595 nm.

Example 2

A dyestuff dispersion was prepared from a dyestuff composition composed of 15 parts of a disazo dyestuff represented by the structural formula

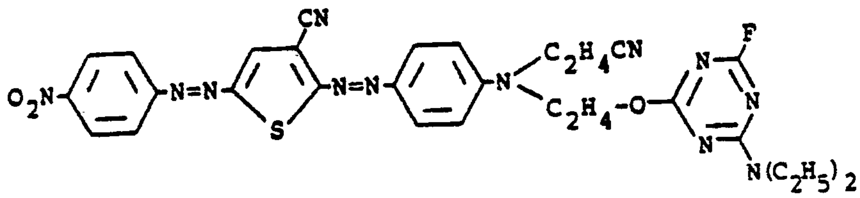

10 parts of a Pluronic type surface active agent ("Pluronic L 64" trademark, manufactured by Asahi Electrochemical Industries, Ltd.) and 75 parts of water using a sand grinder as a fine dispersion machine. A printing color paste having the following composition:

| | |
|---|---|
| Dyestuff dispersion | 7 parts |
| 5% Sodium alginate aqueous solution | 55 parts |
| Diacetate of polypropylene glycol, average molecular weight: 300 | 10 parts |
| Polethylene glycol diglycidyl ether, average molecular weight: 200 | 3 parts |
| Water | 25 parts |
| | 100 parts (pH 6.5) |

was prepared. A mercerized cotton broad (40 counts) was print-dyed with the printing color paste using a screen print dyeing machine. After provisionally drying at 80°C for 3 minutes, the dyed cotton broad was treated with superheated steam at 185°C for 7 minutes.

Then, washing treatments were performed in accordance with the procedures described in Example 1 to obtain a blue dyed product having excellent light fastness and wet color fastness.

The dyestuff used in this Example was prepared by adding 11.0 g of 2-amino-3-cyano-5-(4'-nitrophenyl-5-(4'nitrophenylazo)thiopheneazo)thiophene to a mixture of 160 ml of 85% phosphoric acid and 200 ml of glacial acetic acid, cooling the mixture to 5°C or less, gradually adding 17.0 g of 40% nitrosil sulfuric acid to the mixture, stirring the resulting mixture at 0 to 2°C for 4 hours, dropwise adding the resulting diazo liquid to a solution prepared by dissolving 2 g of urea and 14.3 g of N-cyanoethyl-N-(2-fluoro-4-N,N-diethylamino-6-triazinyloxy)ethylaniline in 300 ml of methanol, separating the resulting precipitates by filtration, washing with water and then drying at room temperature to obtain 18 g (yield, 75%) of blue dyed powders of the dyestuff represented by the structural formula described above. The λmax of this dyestuff in acetone was 625 nm.

Example 3

A dyestuff ink was prepared from a dyestuff composition composed of 10 parts of a disazo dyestuff shown by the structural formula

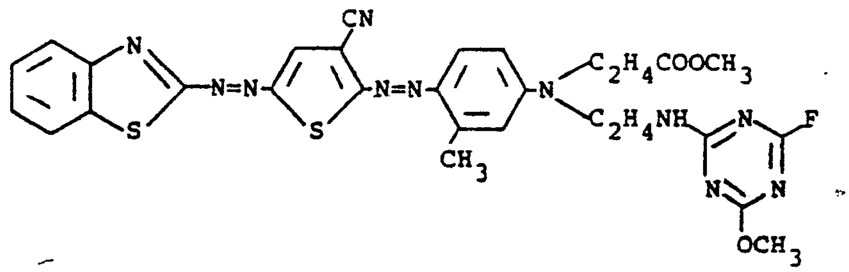

2 parts of polyoxyethylene glycol nonylphenyl ether (HLB 8.9) and 88 parts of diethylene glycol diacetate using a paint conditioner as a fine dispersion machine for pulverization.

After mixing 10 parts of this dyestuff ink and 55 parts of mineral terpene, the mixture was gradually added to 35 parts of an aqueous solution having the following composition while stirring with a homomixer (5,000 to 7,000 rpm) until the system became homogeneous. Thus, a viscous O/W emulsion color paste was prepared.

| | |
|---|---|
| Water | 31 parts |
| Lepisol G (trademark, manufactured by Daiichi Kogyo Seiyaku Co., Ltd., special nonionic surface active agent) | 3.8 parts |
| Sodium trichloroacetate | 0.1 part |
| | 34.9 parts |

Then, a polyester/cotton (mixing ratio, 65/35) mixed spun cloth was print-dyed with the color paste using a screen print dyeing machine. After drying at 100°C for 2 minutes, the dyed cloth was treated with superheated steam at 175°C for 7 minutes. The dyed cloth was washed in a hot tetrachloroethylene bath containing a small amount of water and dried to obtain a blue dyed product having excellent light fastness and moisture fastness without any strain on white ground.

The dyestuff used in this Example was prepared in accordance with the same manner as described in Example 1.

The λmax of the dyestuff was 645 nm.

Example 4

A dyestuff dispersion was prepared from a dyestuff composition composed of 16 parts of a disazo dyestuff having the structural formula

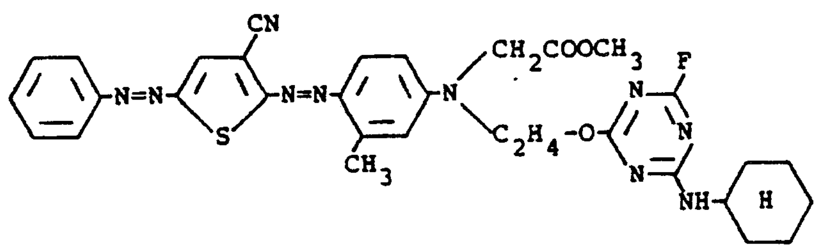

7 parts of polyoxyethylene glycol nonylphenyl ether (HLB 13.3), 3 parts of naphthalenesulfonic acidformaldehyde condensate and 74 parts of water using a sand grinder as a fine dispersion machine.

A padding bath having the following composition was prepared using this dyestuff dispersion.

| | |
|---|---|
| Dyestuff dispersion | 6 parts |
| Tetraethylene glycol dimethyl ether | 15 parts |
| Water | 79 parts |
| | 100 parts (pH 8.0) |

A polyester/cotton (mixing weight ratio, 65/35) mixed spun cloth was impregnated with the padding bath. After squeezing the cloth to a squeezing rate of 45%, the dyes cloth was dried at 100°C for 2 minutes and then dry heated at 200°C for 1 minute to fix. The cloth was washed with a hot ethanol bath to obtain a red dyed product having excellent light fastness and wet color fastness.

The dyestuff used in this example was prepared in accordance with the same manner as described in Example 1.

The λmax (acetone) of the dyestuff was 503 nm.

Example 5

The print dyeing was conducted in the same manner as in Example 1 except for using a nylon/rayon (mixing ratio, 50/50) mixed spun cloth and a dry heating temperature for fixing of 185°C to obtain a blue dyed product having excellent moisture fastness and light fastness.

Example 6

The print dyeing was conducted using disazo dyestuffs shown in Table 1 in the same manner as described in Example 1.

The dyed clothes thus obtained had excellent light fastness and moisture fastness.

The hye of the dyed clothes and λmax (acetone) of the dyestuffs are shown in Table 1.

TABLE 1

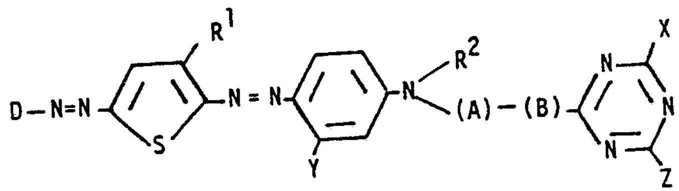

(I)

| No. | D– | $-R^1$ | $-R^2$ | –X | –Y | –Z | –A– | –B– | Hue of Dyed Cloth | λ max (acetone) (nm) |
|---|---|---|---|---|---|---|---|---|---|---|
| 1 | 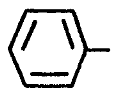 | –CN | $-C_2H_4COOCH_3$ | –F | –H | $-N(C_2H_5)_2$ | $-C_2H_4-$ | –O– | blue | 608 |
| 2 | ,, | ,, | $-C_2H_4OCOCH_3$ | ,, | ,, | ,, | ,, | ,, | ,, | 606 |
| 3 | ,, | ,, | $-C_2H_4COOCH_2$– 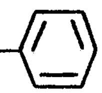 | ,, | ,, | ,, | ,, | ,, | ,, | 607 |
| 4 | ,, | ,, | $-C_2H_4OCO$ 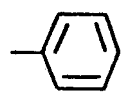 | ,, | ,, | ,, | ,, | ,, | ,, | 605 |
| 5 | ,, | ,, | $-C_2H_4COOC_2H_4O$ 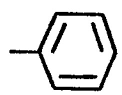 | ,, | ,, | ,, | ,, | ,, | ,, | 608 |
| 6 | ,, | ,, | $-C_3H_6COOC_2H_5$ | ,, | ,, | ,, | ,, | ,, | ,, | 615 |

TABLE 1 (Continued)

| No. | D– | $-R^1$ | $-R^2$ | –X | –Y | –Z | –A– | –B– | Hue of Dyed Cloth | λ max (acetone) (nm) |
|---|---|---|---|---|---|---|---|---|---|---|
| 7 | 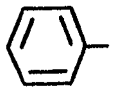 | –CN | $-C_2H_4COOC_4H_9(n)$ | –Cl | –H | $-N(C_2H_5)_2$ | $-C_2H_4-$ | –O– | blue | 608 |
| 8 | ,, | ,, | $-CH_2COOCH_3$ | –F | ,, | $-N[C_4H_9(n)]_2$ | ,, | ,, | ,, | 592 |
| 9 | ,, | ,, | $-CH_2COOCH_2-$ 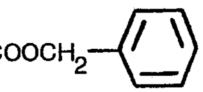 | ,, | ,, | ,, | ,, | ,, | ,, | 590 |
| 10 | ,, | ,, | $-C_2H_4COOC_2H_4OCH_3$ | ,, | ,, | ,, | ,, | ,, | ,, | 591 |
| 11 | ,, | ,, | $-CH_2COOC_8H_{17}(n)$ | ,, | ,, | ,, | ,, | ,, | ,, | 593 |
| 12 | ,, | ,, | $-C_2H_5$ | ,, | ,, | ,, | ,, | ,, | ,, | 619 |
| 13 | ,, | ,, | $-CH_2-CH=CH_2$ | ,, | ,, | ,, | ,, | ,, | ,, | 615 |
| 14 | ,, | ,, | $-C_2H_4OCOCH_2Cl$ | –Cl | ,, | ,, | ,, | ,, | ,, | 604 |
| 15 | ,, | ,, | $-C_2H_4OCOC_2H_4Cl$ | ,, | ,, | ,, | ,, | ,, | ,, | 606 |
| 16 | ,, | ,, | $-CH_2$ 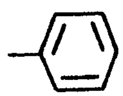 | ,, | ,, | ,, | ,, | ,, | ,, | 612 |
| 17 | ,, | ,, | $-C_2H_4OCH_3$ | –F | ,, | $-N(C_2H_5)_2$ | ,, | ,, | ,, | 609 |

TABLE 1 (Continued)

| No. | D– | –$R^1$ | –$R^2$ | –X | –Y | –Z | –A– | –B– | Hue of Dyed Cloth | λ max (acetone) (nm) |
|---|---|---|---|---|---|---|---|---|---|---|
| 18 | 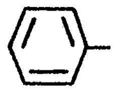 | –CN | $-CH_2$ 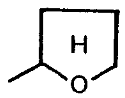 | –F | –H | $-N(C_2H_5)_2$ | $-C_2H_4-$ | –O– | blue | 610 |
| 19 | ,, | ,, | $-C_2H_4$ 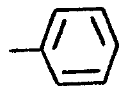 | ,, | ,, | ,, | ,, | ,, | ,, | 613 |
| 20 | ,, | ,, | $-C_2H_4O$ 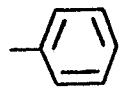 | ,, | ,, | ,, | ,, | ,, | ,, | 610 |
| 21 | ,, | ,, | –H | ,, | ,, | ,, | ,, | ,, | ,, | 607 |
| 22 | ,, | ,, | $-C_2H_4OH$ | ,, | ,, | ,, | ,, | ,, | ,, | 609 |
| 23 | ,, | ,, | 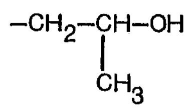 | ,, | ,, | ,, | ,, | ,, | ,, | 611 |
| 24 | ,, | ,, | $-C_2H_4Cl$ | –Cl | ,, | ,, | ,, | ,, | ,, | 598 |
| 25 | ,, | ,, | 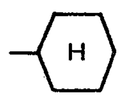 | ,, | ,, | ,, | ,, | ,, | ,, | 617 |
| 26 | ,, | ,, | $-C_2H_4CN$ | –F | $-CH_3$ | ,, | 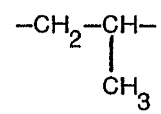 | ,, | ,, | 607 |

TABLE 1 (Continued)

| No. | D– | $-R^1$ | $-R^2$ | –X | –Y | –Z | –A– | –B– | Hue of Dyed Cloth | λmax (acetone) (nm) |
|---|---|---|---|---|---|---|---|---|---|---|
| 27 | 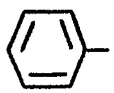 | –CN | $-C_2H_4CN$ | –F | $-CH_3$ | 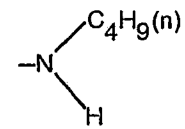 | 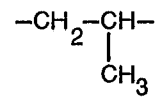 | –O– | blue | 606 |
| 28 | ,, | ,, | ,, | ,, | ,, | 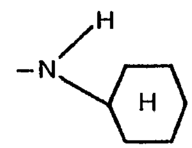 | ,, | ,, | ,, | 606 |
| 29 | ,, | ,, | ,, | ,, | ,, | 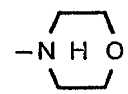 | ,, | ,, | ,, | 605 |
| 30 | ,, | ,, | ,, | ,, | ,, | 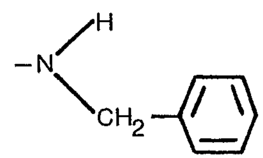 | ,, | ,, | ,, | 605 |
| 31 | ,, | ,, | ,, | ,, | ,, | 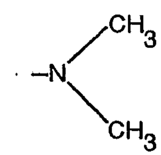 | ,, | ,, | ,, | 607 |
| 32 | ,, | ,, | 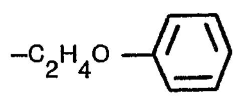 | ,, | ,, | 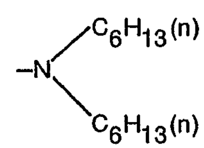 | ,, | ,, | ,, | 608 |

TABLE 1 (Continued)

| No. | D– | –$R^1$ | –$R^2$ | –X | –Y | –Z | –A– | –B– | Hue of Dyed Cloth | λ max (acetone) (nm) |
|---|---|---|---|---|---|---|---|---|---|---|
| 33 | 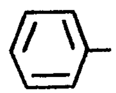 | –CN | –$C_2H_4O$ 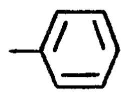 | –Cl | –$CH_3$ | 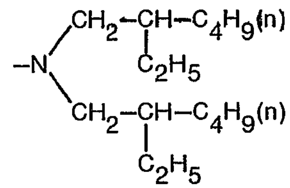 | 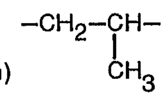 | –O– | blue | 608 |
| 34 | ,, | ,, | ,, | ,, | ,, | –$N(C_2H_4CN)_2$ | ,, | ,, | ,, | 605 |
| 35 | ,, | ,, | –$C_2H_4CN$ | –F | –H | 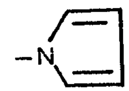 | 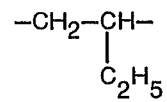 | ,, | ,, | 596 |
| 36 | ,, | ,, | ,, | ,, | ,, | –$N(C_2H_4OCH_3)_2$ | ,, | ,, | ,, | 596 |
| 37 | ,, | ,, | ,, | ,, | ,, | –$N(CH_2-CH=CH_2)_2$ | ,, | ,, | ,, | 596 |
| 38 | ,, | ,, | ,, | ,, | ,, | –$N(C_2H_4OH)_2$ | ,, | ,, | ,, | 596 |
| 39 | ,, | ,, | ,, | ,, | ,, | 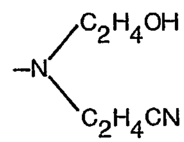 | –$C_2H_4$– | ,, | ,, | 596 |

TABLE 1 (Continued)

| No. | D– | $-R^1$ | $-R^2$ | –X | –Y | –Z | –A– | –B– | Hue of Dyed Cloth | λ max (acetone) |
|---|---|---|---|---|---|---|---|---|---|---|
| | | | | | | | | | | (nm) |
| 40 | 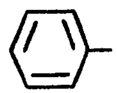 | –CN | $-C_2H_4CN$ | –F | –H | –NH 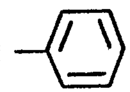 | $-C_2H_4-$ | –O– | blue | 596 |
| 41 | ,, | ,, | ,, | ,, | ,, | –N( 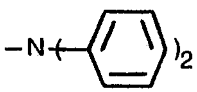 $)_2$ | ,, | ,, | ,, | 596 |
| 42 | ,, | ,, | ,, | ,, | ,, | 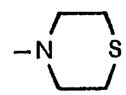 | ,, | ,, | ,, | 596 |
| 43 | ,, | ,, | ,, | ,, | ,, | $-NH_2$ | ,, | ,, | ,, | 596 |
| 44 | ,, | $-COOCH_3$ | $-C_2H_4COOCH_3$ | ,, | $-NHCOCH_3$ | $-N(C_2H_5)_2$ | ,, | ,, | ,, | 624 |
| 45 | ,, | $-COOC_4H_9(n)$ | ,, | ,, | $-CH_3$ | ,, | ,, | ,, | ,, | 609 |
| 46 | ,, | $-COOCH_3$ | ,, | –Cl | –Cl | ,, | ,, | ,, | purple | 578 |
| 47 | ,, | ,, | ,, | –F | –H | ,, | $-CH_2-CH(CH_3)-$ | ,, | ,, | 584 |
| 48 | ,, | ,, | $-C_2H_4CN$ | ,, | ,, | ,, | $-C_2H_4-$ | ,, | ,, | 583 |

TABLE 1 (Continued)

| No. | D– | –$R^1$ | –$R^2$ | –X | –Y | –Z | –A– | –B– | Hue of Dyed Cloth | λ max (acetone) (nm) |
|---|---|---|---|---|---|---|---|---|---|---|
| 49 | 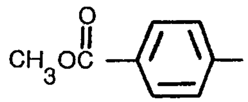 | $-COOCH_3$ | $-C_2H_4CN$ | –F | –H | $-N(C_2H_5)_2$ | $-C_2H_4-$ | –O– | blue | 598 |
| 50 | 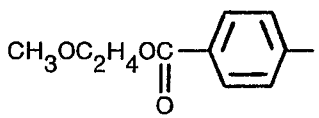 | $-COOC_2H_5$ | ,, | ,, | ,, | ,, | ,, | –NH– | ,, | 601 |
| 51 | 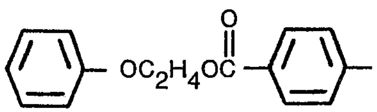 | ,, | $-CH_2COOCH_3$ | ,, | $-CH_3$ | ,, | ,, | ,, | ,, | 606 |
| 52 | 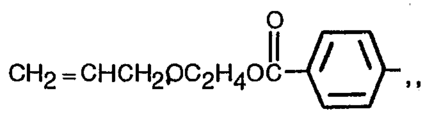 | ,, | ,, | ,, | ,, | ,, | ,, | ,, | ,, | 606 |
| 53 | 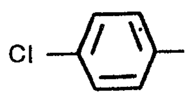 | –CN | $-C_2H_4CN$ | ,, | –H | ,, | ,, | –O– | ,, | 607 |
| 54 | ,, | ,, | $-C_2H_4COOCH_3$ | ,, | $-NHCOCH_3$ | ,, | 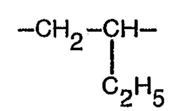 | ,, | ,, | 637 |
| 55 | 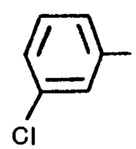 | ,, | $-C_2H_4CN$ | ,, | $-CH_3$ | ,, | ,, | ,, | ,, | 614 |

TABLE 1 (Continued)

| No. | D– | –$R^1$ | –$R^2$ | –X | –Y | –Z | –A– | –B– | Hue of Dyed Cloth | λ max (acetone) (nm) |
|---|---|---|---|---|---|---|---|---|---|---|
| 56 | 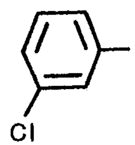 | –CN | $-CH_2COOCH_3$ | –F | –H | $-N(C_2H_5)_2$ | $-C_2H_4-$ | –O– | blue | 603 |
| 57 | ,, | ,, | ,, | ,, | ,, | $-OC_2H_5$ | ,, | –NH– | ,, | 608 |
| 58 | 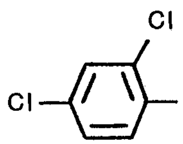 | $-COOCH_3$ | $-C_2H_4CN$ | ,, | ,, | $-OC_4H_9(n)$ | ,, | ,, | ,, | 612 |
| 59 | ,, | ,, | $-C_2H_4COOCH_3$ | ,, | ,, | $-N(C_2H_5)_2$ | ,, | –O– | ,, | 614 |
| 60 | ,, | –CN | $-C_2H_4OCOCH_3$ | ,, | ,, | ,, | ,, | ,, | ,, | 613 |
| 61 | ,, | ,, | ,, | ,, | –Cl | $-OCH_3$ | ,, | ,, | ,, | 605 |
| 62 | 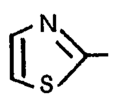 | ,, | $-C_2H_4CN$ | ,, | –H | $-N(C_2H_5)_2$ | ,, | ,, | ,, | 638 |
| 63 | ,, | ,, | ,, | ,, | $-NHCOCH_3$ | ,, | ,, | ,, | ,, | 652 |
| 64 | ,, | ,, | ,, | ,, | –Cl | ,, | ,, | ,, | ,, | 627 |
| 65 | ,, | $-COOCH_3$ | ,, | ,, | $-NHSO_2CH_3$ | ,, | ,, | ,, | ,, | 638 |

TABLE 1 (Continued)

| No. | D– | –$R^1$ | –$R^2$ | –X | –Y | –Z | –A– | –B– | Hue of Dyed Cloth | λ max (acetone) (nm) |
|---|---|---|---|---|---|---|---|---|---|---|
| 66 | 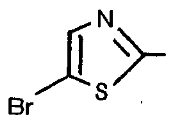 | –CN | $-C_2H_4CN$ | –F | –NHCO– 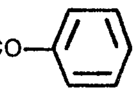 | $-N(C_2H_5)_2$ | $-C_2H_4-$ | –O– | blue | 662 |
| 67 | ,, | ,, | ,, | ,, | $-NHCOC_2H_4Cl$ | ,, | ,, | ,, | ,, | 667 |
| 68 | 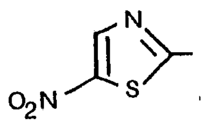 | ,, | ,, | ,, | –H | 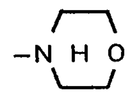 | ,, | ,, | ,, | 674 |
| 69 | ,, | ,, | ,, | ,, | ,, | $-N(C_2H_5)_2$ | ,, | ,, | ,, | 674 |
| 70 | ,, | ,, | ,, | ,, | $-CH_3$ | ,, | ,, | ,, | ,, | 685 |
| 71 | 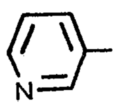 | ,, | ,, | –Cl | –H | ,, | ,, | ,, | ,, | 616 |
| 72 | ,, | ,, | ,, | –F | $-CH_3$ | ,, | ,, | ,, | ,, | 628 |
| 73 | ,, | ,, | ,, | ,, | –Cl | ,, | ,, | ,, | ,, | 608 |
| 74 | 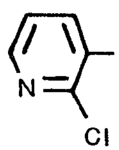 | ,, | ,, | ,, | –H | ,, | ,, | ,, | ,, | 624 |

TABLE 1 (Continued)

| No. | D– | –$R^1$ | –$R^2$ | –X | –Y | –Z | –A– | –B– | Hue of Dyed Cloth | λmax (acetone) (nm) |
|---|---|---|---|---|---|---|---|---|---|---|
| 75 | 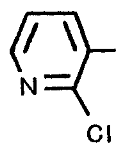 | –CN | 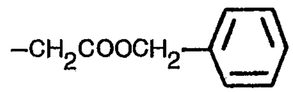 | –F | –H | $-N(C_2H_5)_2$ | $-C_2H_4-$ | –O– | blue | 621 |
| 76 | ,, | ,, | 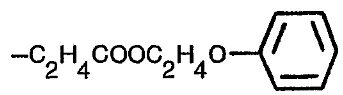 | | ,, | ,, | ,, | ,, | ,, | 633 |
| 77 | 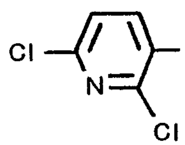 | ,, | ,, | ,, | ,, | ,, | ,, | ,, | ,, | 641 |
| 78 | ,, | ,, | $-CH_2COOCH_3$ | ,, | ,, | ,, | ,, | ,, | ,, | 632 |
| 79 | ,, | ,, | 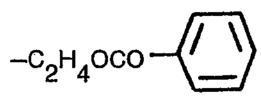 | ,, | ,, | ,, | ,, | ,, | ,, | 641 |
| 80 | 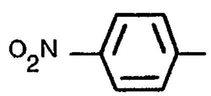 | ,, | $-C_2H_4COOCH_3$ | ,, | ,, | ,, | ,, | ,, | ,, | 642 |
| 81 | ,, | ,, | ,, | ,, | $-CH_3$ | 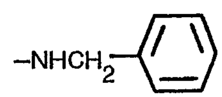 | ,, | ,, | ,, | 651 |
| 82 | ,, | ,, | ,, | ,, | –H | 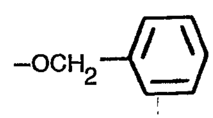 | ,, | –NH– | ,, | 646 |

TABLE 1 (Continued)

| No. | D− | $-R^1$ | $-R^2$ | −X | −Y | −Z | −A− | −B− | Hue of Dyed Cloth | λ max (acetone) (nm) |
|---|---|---|---|---|---|---|---|---|---|---|
| 83 | 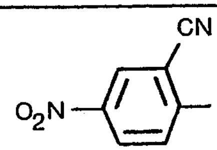 | −CN | $-C_2H_4COOCH_3$ | −F | −H | $-OC_2H_4OH$ | $-C_2H_4-$ | −NH− | blue | 663 |
| 84 | ,, | ,, | ,, | ,, | ,, | $-OCH_2-$ 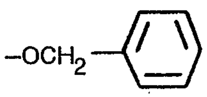 | ,, | ,, | ,, | 663 |
| 85 | 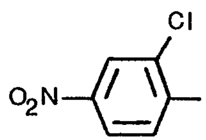 | ,, | ,, | ,, | ,, | ,, | ,, | ,, | ,, | 655 |
| 86 | ,, | $-COOCH_3$ | ,, | ,, | ,, | ,, | ,, | ,, | ,, | 646 |
| 87 | 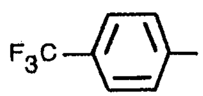 | ,, | $-C_2H_4CN$ | ,, | ,, | $-N(C_2H_5)_2$ | ,, | −O− | ,, | 615 |
| 88 | 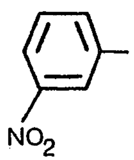 | ,, | ,, | ,, | ,, | ,, | ,, | ,, | ,, | 618 |
| 89 | 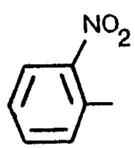 | −CN | ,, | ,, | ,, | ,, | ,, | ,, | ,, | 619 |

TABLE 1 (Continued)

| No. | D– | $-R^1$ | $-R^2$ | –X | –Y | –Z | –A– | –B– | Hue of Dyed Cloth | λ max (acetone) (nm) |
|---|---|---|---|---|---|---|---|---|---|---|
| 90 | 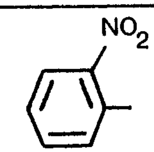 | –CN | $-CH_2-$ 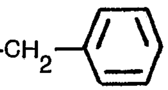 | –F | $-CH_3$ | $-N(C_2H_5)_2$ | $-C_2H_4-$ | –O– | blue | 642 |
| 91 | ,, | ,, | $-C_2H_5$ | ,, | –H | ,, | ,, | ,, | ,, | 627 |
| 92 | 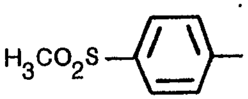 | ,, | $-C_2H_4CN$ | ,, | ,, | ,, | ,, | ,, | ,, | 625 |
| 93 | ,, | ,, | $-CH_2$ 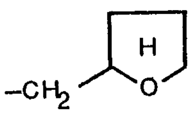 | ,, | ,, | ,, | ,, | ,, | ,, | 631 |
| 94 | ,, | ,, | $-CH_2COOCH_2-$ 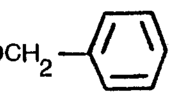 | ,, | ,, | ,, | ,, | ,, | ,, | 622 |
| 95 | 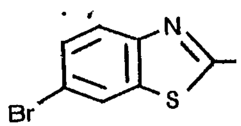 | ,, | $-C_2H_4CN$ | ,, | ,, | ,, | ,, | ,, | ,, | 625 |
| 96 | 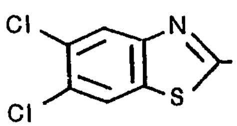 | ,, | $-C_2H_4OCH_3$ | –Cl | $-CH_3$ | $-NHC_4H_9(n)$ | $-CH_2-CH(C_2H_5)-$ | ,, | ,, | 648 |
| 97 | 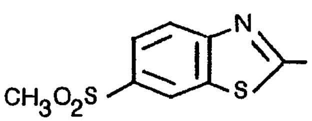 | ,, | $-C_2H_4COO-CH_2-$ 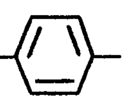 | –F | –Cl | $-NHC_3H_7(i)$ | $-C_2H_4-$ | ,, | ,, | 642 |

**Claims**

1. A disazo dyestuff for cellulose-containing fibre having the following general formula (I):

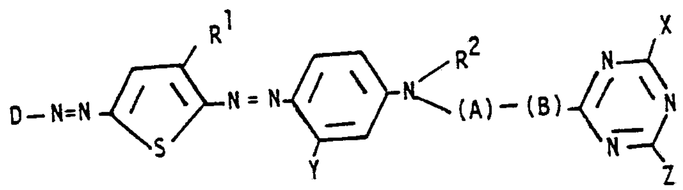

(I)

wherein D represents substituted or unsubstituted phenyl, pyridyl, thiazolyl or benzothiazolyl; $R^1$ represents cyano or alkoxycarbonyl; Y represents hydrogen, chlorine, methyl or acylamino; $R^2$ represents substituted or unsubstituted alkyl, cyclohexyl, alkenyl or aryl; Z represents $—NR^3R^4$ or $—OR^5$ wherein $R^3$, $R^4$ and $R^5$ each represents hydrogen or an alkyl, alkenyl, cyclohexyl aryl or aralkyl group which may be substituted by cyano, hydroxy, alkoxy, or dialkylamino, or $R^3$ and $R^4$ may together represent a 5-membered or 6-membered nitrogen-containing heterocyclic ring; A represents

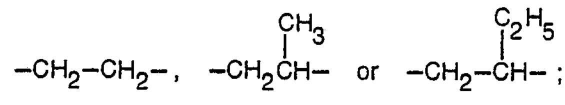

or ;

B represents oxygen or —NH—; and X represents fluorine or chlorine.

2. A disazo dyestuff as claimed in Claim 1, in which Z represents $—NR^3R^4$ wherein $R^3$ and $R^4$ are each as defined in Claim 1 and B represents oxygen, D, $R^1$, $R^2$, A and X being as defined in Claim 1.

3. A disazo dyestuff as claimed in Claim 1, in which D represents substituted or unsubstituted phenyl; $R^1$ represents cyano; Y represents hydrogen, chlorine of methyl; $R^2$ represents substituted or unsubstituted alkyl; and X represents fluorine, Z, A and B being as defined in Claim 1.

4. A disazo dyestuff as claimed in Claim 1, in which D represents substituted or unsubstituted phenyl; $R^1$ represents cyano; Y represents hydrogen, chlorine or methyl; $R^2$ represents substituted or unsubstituted alkyl; Z represents $—NR^3R^4$ wherein $R^3$ and $R^4$ are each as defined in Claim 1, A represents $CH_2—CH_2—$; B represents oxygen; and X represents fluorine.

5. A process for preparing a disazo dyestuff of the general formula (I) as set forth and defined in Claim 1, which comprises diazotizing an amine of the following general formula (II):

$$D—NH_2 \qquad (II)$$

wherein D is as defined in Claim 1, coupling the resultant diazotized compound with an amine of the following general formula (III):

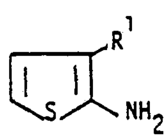

(III)

wherein $R^1$ is as defined in Claim 1, diazotizing the resultant monoazo compound of the following general formula (IV):

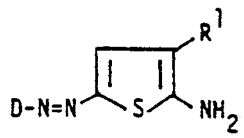

(IV)

wherein D and $R^1$ are as previously defined, and coupling the diazotized compound with an aniline of the following general formula (V):

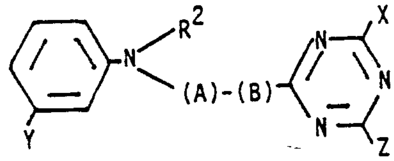

(V)

wherein X, Y, Z, A, B and $R^2$ are as previously defined in Claim 1.

6. A process as claimed in Claim 5, wherein the aniline of the general formula (V) is prepared by reacting an aniline of the following general formula (VI):

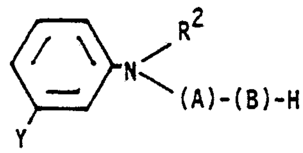

(VI)

wherein Y, $R^2$, A and B are as defined in Claim 5 with 2,4,6-trihalogenotriazine in the presence of a solvent and a neutralization agent and reacting the resultant compound of the following general formula (VII):

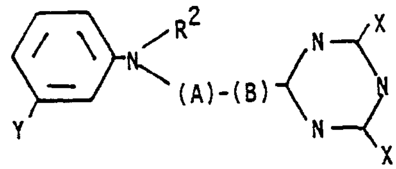

(VII)

with an alcohol or amine of the following general formula (VIII):

ZH

wherein Z is as defined in Claim 5 in the presence of a solvent and neutralization agent.

**Patentansprüche**

1. Disazofarbstoff für celluloseaaltige Fasern der folgenden allgemeinen formel

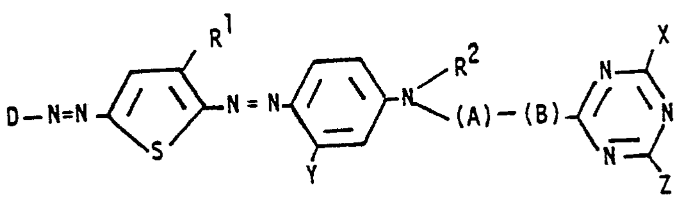

(I)

worin D substituiertes oder unsubstituietes Phenyl, Pyridyl, Thiazolyl oder Benzothiazolyl darstellt; $R^1$ Cyano oder Alkoxycarbonyl darstellt; Y Wasserstoff, Chlor, Methyl oder Acylamino darstellt; $R^2$ substituiertes oder unsubstituiertes Alkyl, Cyclohexyl, Alkenyl oder Aryl darstellt; Z —$NR^3R^4$ oder —$OR^5$ darstellt, worin $R^3$, $R^4$ und $R^5$ je Wasserstoff oder eine Alkyl-, Alkenyl-, Cyclohexyl-, Aryl- oder Aralkyl-Gruppe darstellen, welche durch Cyano, Hydroxy, Alkoxy oder Dialkylamino substituiert sein können oder $R^3$ und $R^4$ zusammen einen fünf- oder sechsgliedrigen stickstofhaltigen, heterocyclischen Ring darstellen;

A $-CH_2-CH_2-$, $-CH_2CH(CH_3)-$ oder $-CH_2-CH(C_2H_5)-$;

darstellt; B Sauerstoff oder —NH— darstellt; und X Fluor oder Chlor darstellt.

2. Disazofarbstoff gemäss Anspruch 1, worin Z —$NR^3R^4$ darstellt, worin $R^3$ und $R^4$ wie im Anspruch 1 definiert sind und B Sauerstoff darstellt, D, $R^1$, $R^2$, A und X wie im Anspruch 1 definiert sind.

3. Disazofarbstoff gemäss Anspruch 1, worin D substitutiertes oder unsubstituiertes Phenyl darstellt; $R^1$ Cyano darstellt; Y Wasserstoff, Chlor oder Methyl darstellt; $R^2$ substituiertes oder unsubstituiertes Alkyl darstellt und X Fluor darstellt, wobei Z, A und B wie im Anspruch 1 definiert sind.

4. Disazofarbstoff gemäss Anspruch 1, worin D substituiertes oder unsubstituiertes Phenyl darstellt; $R^1$ Cyano darstellt; Y Wasserstoff, Chlor oder Methyl darstellt; $R^2$ substituiertes oder unsubstituiertes Alkyl darstellt; Z —$NR^3R^4$ darstellt, worin $R^3$ und $R^4$ jedes wie in Anspruch 1 definiert sind, A $CH_2$—$CH_2$— darstellt; B Sauerstoff darstellt; und X Fluor darstellt.

5. Verfahren zur Herstellung eines Disazofarbstoffes der allgemeinen Formel I, wie im Anspruch 1 dargelgt und definiert, dadurch gekennziechnet, dass ein Amin der folgenden Formel II diazotiert wird

$$D—NH_2 \quad (II)$$

worin D wie im Anspruch 1 definiert ist, die resultierende diazotierte Verbindung mit einem Amin der folgenden allgemeinen formel III diazotiert wird

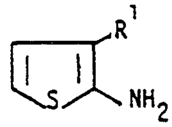

(III)

worin $R^1$ wie in Anspruch 1 definiert ist, die resultierende Monoazoverbindung der folgenden allgemeinen Formel IV diazotiert wird

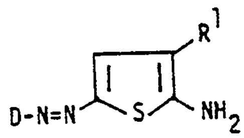

(IV)

worin D und $R^1$ wie vorher definiert sind und die diazotierte Verbindung mit einem Anilin der folgenden allgemeinen formel V gekuppelt wird

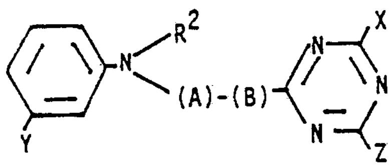

(V)

worin X, Y, Z, A, B und $R^2$ wie vorher im Anspruch 1 definiert sind.

6. Verfahren gemäss Anspruch 5, worin das Anilin der allgemeinen Formel V hergestellt wird, durch Umsetzen eines Anilins der folgenden Formel

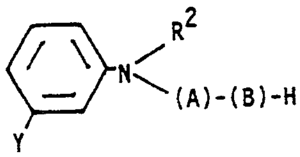

(VI)

worin Y, $R^2$, A und B wie im Anspruch 5 definiert sind, mit 2,4,6-Trihalogenotriazin in Gegenwart eines Lösungsmittels und eines Neutralisationsmittels und Umsetzen der erhaltenen Verbindung der folgenden allgemeinen Formel

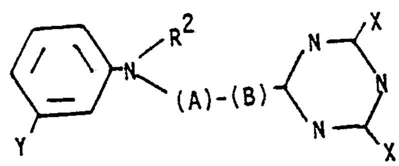

(VII)

mit einem Alkohol oder Amin der folgenden allgemeinen Formel

$$ZH \qquad \text{(VIII)}$$

worin Z wie im Anspruch 5 definiert ist, in Gegenwart eines Lösungsmittels und eines Neutralisationsmittels.

**Revendications**

1. Colorant disazoïque pour fibre contenant de la cellulose, ayant la formule générale

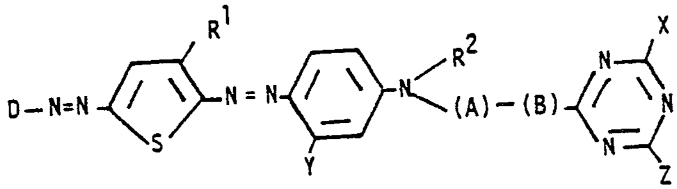

(I)

dans laquelle D représente un radical phényle, pyridyle, thiazolyle ou benzothiazolyle substitué ou non substitué, $R^1$ représente ou radical cyano ou alcoxycarbonyle Y représente un atome d'hydrogène, de

chlore, un radical méthyle ou'acylamino; $R^2$ représente un radical alkyle, cyclohexyle, alkenyle ou aryle substitué ou non substitué; Z représente un groupe —$NR^3R^4$ ou —$OR^5$ dans lequel $R^3$, $R^4$ et $R^5$ repréentent chacun un atome d'hydrogène, ou un groupe alkyle, alkenyle, cyclohexyle, aryle ou aralkyle qui peut être substitué par un radical cyano, hydroxy, alkoxy ou dialkylamino, ou bien $R^3$ et $R^4$ représentent ensemble un anneau hétérocyclique contenant un atome d'azote et comprotant 5 ou 6 membres; A représente

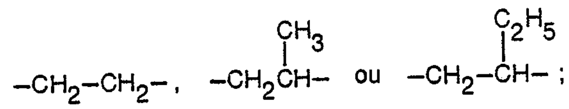

B représente un atome d'oxygène ou —NH—; et X repréente un atome de fluore ou de chlore.

2. Colorant disazoîne selon la revendication 1, dans lequel Z représente un groupe —$NR^3R^4$, avec $R^3$ et $R^4$ ayant chacun la signification définie dans la revendication 1 et B représente un atome d'oxygène, D, $R^1$, $R^2$, A et X ayant la signification définie dans la revendication 1.

3. Colorant disazoîque selon la revendication 1, dans lequel D représente un radical phényle substitué ou non substitué; $R^1$ représente un radical cyano, R représente un atome d'hydrogène, de chlore ou un radical de méthyle, $R^2$ représente un radical alkyle substitué ou non substitué et X représente le fluor, A et B ayant la signification définie dans la revendication 1.

4. Colorant disazoîque selon la revendication 1, dans lequel D représente un radical phényle substitué ou non substitué, $R^1$ représente un radical cyano, Y représente un atome d'hydrogène, de chlore ou un radical méthyle, $R^2$ représente un radical alkyle substitué ou non substitué; Z représente un groupe —$NR^3R^4$ avec $R^3$ et $R^4$ ayant chacun la significant définie dans la revendication 1, A représente $CH_2$—$CH_2$—; B repréente un atome d'oxygène et X représente le fluor.

5. Procédé de préparation d'un colorant disazoîque ayant la formule générale (I) tel que défini dans la revendication 1 comprenant les étapes de diazotation d'une amine ayant la formule généale

$$D—NH_2 \qquad (II)$$

dans laquelle D a la même définition que dans la revendication 1, de couplage du composé diazoté en résultant avec une amine ayant la formule générale

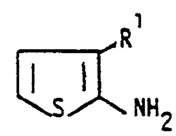

(III)

dans laquelle $R^1$ a la même signification que dans la revendication 1, de diazotation du composé monoazo résultant ayant la formule générale

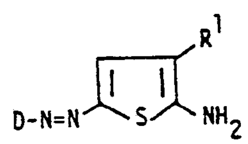

(IV)

dans laquelle D et $R^1$ on la même signification que ci-dessus et de couplage du composé diazoté résultant avec une aniline de la formule générale

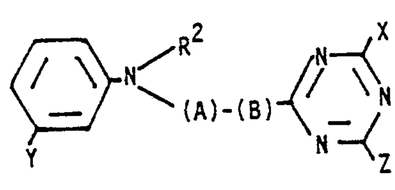

(V)

dans laquelle X, Y, Z, A, B et $R^2$ ont les significations définies précédemment dans la revendication 1.

6. Procédé selon la revendication 5, dans lequel l'aniline de formule générale V est préparée par réaction d'une aniline de formule générale

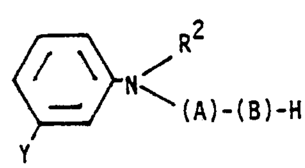

(VI)

dans laquelle Y, $R^2$, A et b ont les significations définies dans la revendication 5 avec 2,4,6-trihalogenotriazine en présence d'un solvent et d'un agent neutralisant, et par réaction du composé résultant, ayant la formule générale

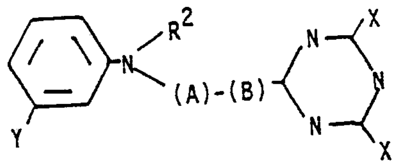

(VII)

avec un alcool ou une amine ayant la formule générale

ZH (VIII)

dans laquelle Z a la signification définie à la revendication 5, en présence d'un solvant et d'un agent de neutralisation.